# EUROPEAN PATENT APPLICATION

(11) **EP 4 525 077 A1**
(43) Date of publication of application: **19.03.2025**
(21) Application number: 22941098.0
(22) Date of filing: 11.05.2022
(51) Int. Cl.: H01M 4/36, H01M 4/587, H01M 4/134, H01M 4/1395

(54) **NEGATIVE ELECTRODE ACTIVE MATERIAL AND PREPARATION METHOD THEREFOR, SECONDARY BATTERY AND ELECTRICAL DEVICE**

(71) Applicant: Contemporary Amperex Technology Co., Limited, Ningde, Fujian 352100 (CN)
(72) Inventor: LV, Zijian, Ningde, Fujian 352100 (CN); WANG, Jiazheng, Ningde, Fujian 352100 (CN)
(74) Representative: Ran, Handong
(86) International application number: PCT/CN2022/092211
(87) International publication number: WO 2023/216138

(57) **Abstract**

A negative electrode active material and a preparation method therefor, a secondary battery and an electrical device. The negative electrode active material comprises a silicon-carbon composite material. An X-ray photoelectron spectrum (XPS) of the silicon-carbon composite material has an Si2p peak, and the Si2p peak can form the following sub-peaks after peak splitting: a first sub-peak which has a binding energy of 99.7±0.2 eV and a second sub-peak which has a binding energy of 98.9±0.2 eV. The peak area ratio of the first sub-peak to the second sub-peak is 1-2:1.

## Description

### TECHNICAL FIELD

The present disclosure relates to the technical field of batteries, in particular to a negative electrode active material, a preparation method thereof, a secondary battery and an electrical device.

### BACKGROUND

In recent years, with the application scope of secondary batteries being wider and wider, secondary batteries are widely used in energy storage power systems such as hydraulic, fire, wind and solar power stations, as well as electric tools, electric bicycles, electric motorcycles, electric vehicles, military equipment, aerospace and other fields. As the secondary batteries have been greatly developed, higher requirements have been placed on energy density, cycle performance, etc.

Silicon-based cathode materials are considered as potential next-generation cathode materials for high energy density lithium-ion batteries because of their higher theoretical specific capacity, lower lithium removal potential, environmental friendliness, abundant reserves and lower cost.

In order to further improve the battery performance, the prior art requires a more preferable negative electrode active material.

### SUMMARY

In view of the above-mentioned problems, the present disclosure provides a novel negative electrode active material, a preparation method thereof, a secondary battery and an electrical device, which are respectively described below.

In a first aspect, the present disclosure provides a negative electrode active material. The negative electrode active material includes a silicon-carbon composite. An X-ray photoelectron spectroscopy (XPS) of the silicon-carbon composite has a Si2p spectrum. The Si2p spectrum has at least one characteristic peak capable of forming sub-peaks after a peak splitting treatment. The sub-peaks include: a first sub-peak having a binding energy ranging from 99.5 eV to 99.9 eV; and a second sub-peak having a binding energy ranging from 98.7eV to 99.1 eV. A peak area ratio of the first sub-peak to the second sub-peak is (1 to 2):1.

The negative electrode active material of the above scheme has a high specific capacity and a long cycle life. It is critical that the peak area ratio of the first sub-peak to the second sub-peak is (1 to 2):1. If the ratio of the peak area of the first sub-peak to the peak area of the second sub-peak is less than 1, it is indicated that the content of pure silicon in the negative electrode active material is high and the silicon crystal grain is large, which is disadvantageous to the lifetime. If the ratio of the peak area of the first sub-peak to the peak area of the second sub-peak is greater than 2, it is indicated that the carbon content in the negative electrode active material is too high, resulting in a low specific capacity of the active material and poor first efficiency.

In some embodiments, the negative electrode active material described above has one or more of the following characteristics: (1) the binding energy of the first sub-peak corresponds to a binding energy of a Si-C bond; (2) the binding energy of the second sub-peak corresponds to a binding energy of a Si-Si bond; (3) the binding energy of the first sub-peak ranges from 99.6eV to 99.8 eV, e.g., 99.7 eV; (4) the binding energy of the second sub-peak ranges from 98.8eV to 99.0 eV, e.g., 98.9eV; (5) the peak area ratio of the first sub-peak to the second sub-peak is (1.5 to 2):1, e.g., (1.6 to 1.8): 1, e.g., 1.7: 1; and (6) the silicon-carbon composite has a silicon element content of 95wt% to 99.9wt% (e.g., 95wt%, 96wt%, 97wt%, 98wt%, 99wt%, or 99.5wt%), and a carbon element content of 0.1wt% to 5wt% (e.g., 0.5wt%, 1wt%, 2wt%, 3wt%, 4wt%, 5wt%).

In some embodiments, the negative electrode active material includes a substrate and the silicon-carbon composite attached to the substrate.

In some embodiments, the substrate has a porous internal structure, and the silicon-carbon composite is attached to the substrate at an outer surface of the substrate and/or in pores of the porous internal structure.

In some embodiments, a material of the substrate includes one or more of a carbon material, a silicon oxide material, a lithium titanate material, or combinations thereof.

In some embodiments, the negative electrode active material further includes a carbon coating layer covering the substrate and/or the silicon-carbon composite.

In some embodiments, the carbon material includes one or more of a graphite material, a hard carbon material, a soft carbon material, or combinations thereof.

In some embodiments, the silicon-carbon composite contains silicon grains having a grain size of 20 nm or less.

In some embodiments, the negative electrode active material has a volume median particle diameter DV₅₀ in a range of 1 µm to 10 µm.

In some embodiments, both the first sub-peak and the second sub-peak have a peak intensity less than 2000, e.g., less than 1500.

In a second aspect, the present disclosure provides a method for preparing a negative electrode active material. The method includes: step S1 of providing a substrate and a vapor deposition device, placing the substrate in a deposition furnace, purging the substrate with an inert gas, and performing a preheating operation to heat up to a temperature ranging from 200°C to 300°C; step S2 of introducing, in a first mode, a gas into the vapor deposition device, wherein the first mode includes simultaneously introducing a silicon source gas and a carbon source gas into the vapor deposition device; and step S3 of allowing the silicon source gas to react with the carbon source gas to deposit a reaction product on a substrate to form a silicon-carbon composite on the substrate. An X-ray photoelectron spectroscopy (XPS) of the silicon-carbon composite has a Si2p peak. The Si2p peak is capable of forming following sub-peaks after peak-splitting treatment: a first sub-peak having a binding energy ranging from 99.5eV to 99.9 eV; and a second sub-peak having a binding energy ranging from 98.7eV to 99.1 eV. A peak area ratio of the first sub-peak to the second sub-peak is (1 to 2):1.

In some embodiments, the first mode in the step S2 includes simultaneously introducing the silicon source gas, the carbon source gas, and an inert gas into the vapor deposition device.

In some embodiments, the step S2 has one or more of the following characteristics: (1) the inert gas is one or more of nitrogen and argon; and (2) a flow rate of the inert gas introduced into the vapor deposition device ranges from 30% to 85% by volume of a total flow rate of all the introduced gases.

In some embodiments, in the step S2, the gases are introduced into the vapor deposition device in the first mode, and a gas pressure in the vapor deposition device is maintained at 200 Pa to 600 Pa higher than a standard atmospheric pressure.

In some embodiments, the step S3 has one or more of the following characteristics: (1) the step S3 is performed at a temperature ranging from 400°C to 800°C; and (2) the step S3 is performed for 1 hour to 12 hours.

In some embodiments, the method further includes, subsequent to the step S3, step S4 of depositing a carbon material on a product obtained in the step S3.

In some embodiments, the step S4 includes: operation S4a of introducing, in a second mode, a gas into the vapor deposition device subsequent to forming the silicon-carbon composite, wherein the second mode includes simultaneously introducing a carbon source gas and an inert gas into the vapor deposition device, a proportion of the carbon source gas ranging from 5% to 15%, and a proportion of the inert gas ranging from 85% to 95%; and operation S4b of decomposing the carbon source gas into a carbon material and depositing the carbon material on the silicon-carbon composite.

In some embodiments, the operation S4b has one or more of the following characteristics: (1) the operation S4b is performed at a temperature ranging from 700°C to850°C; and (2) the operation S4b is performed for 1 hour to 6 hours.

In a third aspect, the present disclosure provides a negative electrode active material prepared by the method for any of the above embodiments.

In a fourth aspect, the present disclosure provides a secondary battery including the negative electrode active material described in any one of the above embodiments.

In a fifth aspect, the present disclosure provides an electrical device including the secondary battery described above.

### Advantageous effects

One or more embodiments of the present disclosure have one or more of the following benefits: (1) the negative electrode active material has a higher specific capacity; (2) the negative electrode active material has a long cycle life; (3) the preparation method for the negative electrode active material has a relatively low cost; and (4) the preparation method for the negative electrode active material has high efficiency.

### BRIEF DESCRIPTION OF DRAWINGS

FIG. 1 is an XPS spectrum of a negative electrode active material according to some examples and comparative examples of the present disclosure.
FIG. 2 is an XRD spectrum of a negative electrode active material according to some examples and comparative examples of the present disclosure.
FIG. 3 is a first cycle charge-discharge curve for button batteries according to some examples and comparative examples of the present disclosure.
FIG. 4 is a plot of capacity retention versus cycle number for total batteries according to some examples and comparative examples of the present disclosure.
FIG. 5 is a schematic diagram of a secondary battery according to an embodiment of the present disclosure.
FIG. 6 is an exploded view of the secondary battery according to an embodiment of the present disclosure shown in FIG. 5.
FIG. 7 is a schematic diagram of a battery module according to an embodiment of the present disclosure.
FIG. 8 is a schematic diagram of a battery pack according to an embodiment of the present disclosure.
FIG. 9 is an exploded view of the battery pack according to an embodiment of the present disclosure as shown in FIG. 8.
FIG. 10 is a schematic diagram of an electrical device in which a secondary battery is used as a power source according to an embodiment of the present disclosure.

### Description of Reference Numerals:

1. battery pack; 2. upper box body; 3. lower box body; 4. battery module; 5. secondary battery; 51. housing; 52. electrode assembly; 53. top cover assembly; 11. positive electrode current collector; 112. surface; 12. conductive primer layer; 13. positive electrode film layer;

### DESCRIPTION OF EMBODIMENTS

Hereinafter, embodiments of a negative electrode active material and a manufacturing method thereof, a positive electrode pole piece, a negative electrode pole piece, a secondary battery, a battery module, a battery pack, and a device of the present disclosure are specifically disclosed with reference to the accompanying drawings as appropriate. However, there may be cases where unnecessary detailed description is omitted. For example, detailed descriptions of well-known matters and repeated descriptions of practically identical structures are omitted. This is to avoid unnecessarily obscuring the following description to facilitate the understanding of a person skilled in the art. In addition, the drawings and the following description are provided to enable a person skilled in the art to fully understand the present disclosure and are not intended to limit the subject matter recited in the claims.

The "range" disclosed herein is defined in terms of lower and upper limits, a given range being defined by selecting a lower limit and an upper limit, the selected lower and upper limits defining the boundaries of the particular range. Ranges defined in this manner may or may not be inclusive and can be arbitrarily combined, i.e., any lower limit can be combined with any upper limit to form a range. For example, if ranges of 60 to 120 and 80 to 110 are listed for a particular parameter, it is understood that ranges of 60 to 110 and 80 to 120 are also contemplated. In addition, the following ranges are all contemplated if the minimum range values listed are 1 and 2, and if the maximum range values listed are 3, 4, and 5: 1 to 3, 1 to 4, 1 to 5, 2 to 3, 2 to 4 and 2 to 5. In the present disclosure, unless otherwise indicated, the numerical range "a to b" represents an abbreviated representation of any real number combination between a and b, where a and b are both real numbers. For example, a numerical range of "0 to 5" indicates that all real numbers between "0 to 5" have been fully set forth herein, and "0 to 5" is merely a shorthand representation of combinations of these numbers. In addition, when it is stated that a certain parameter is an integer of ≥ 2, it is equivalent to disclosing that the parameter is, e.g., an integer of 2, 3, 4, 5, 6, 7, 8, 9, 10, 11, 12, etc.

All embodiments and optional embodiments of the present disclosure may be combined with each other to form a new technical solution if not specifically stated.

Unless otherwise specified, all the technical features and optional technical features of the present disclosure can be combined with each other to form a new technical solution.

Unless otherwise specified, all steps of the present disclosure may be performed sequentially or may be performed randomly, preferably sequentially. For example, the process includes steps (a) and (b), meaning that the process may include steps (a) and (b) performed sequentially, or may include steps (b) and (a) performed sequentially. For example, the reference to the process may further include step (c), meaning that step (c) may be added to the process in any order, e.g., the process may include steps (a), (b) and (c), or may include steps (a), (c) and (b), or may include steps (c), (a) and (b), etc.

If not specifically stated, references herein to "including" and "comprising" are intended to be open-ended or closed-ended. For example, references to "including" and "comprising" may mean that other components not listed may also be included or included, or that only listed components may be included or comprised.

In the present disclosure, the term "or" is inclusive if not specifically stated. For example, the phrase "A or B" means "A, B, or both A and B". More specifically, case "A or B" is satisfied by any one of the following cases: A is true (or present) and B is false (or not present); A is false (or absent) and B is true (or present); or both A and B are true (or present).

### [Secondary battery]

A secondary battery, also referred to as a rechargeable battery or a storage battery, refers to a battery that can be continuously used by activating an active material by means of charging after the battery is discharged.

Generally, a secondary battery includes a positive electrode pole piece, a negative electrode pole piece, a separation membrane, and an electrolyte. During charging and discharging of the battery, active ions (e.g., lithium ions) are intercalated and deintercalated between the positive electrode pole piece and the negative electrode pole piece. The separation membrane is arranged between the positive electrode pole piece and the negative electrode pole piece, and mainly functions to prevent the positive and negative electrodes from being shortcircuited, and at the same time can enable the active ions to pass through. The electrolyte between the positive electrode pole piece and the negative electrode pole piece mainly serves to conduct active ions.

### [Negative electrode pole piece]

A negative electrode pole piece includes a negative electrode current collector and a negative electrode film layer provided on at least one surface of the negative electrode current collector The negative electrode film layer includes a negative electrode active material, and the negative electrode active material uses the negative electrode active material of any one of the present disclosures.

As an example, the negative electrode current collector has two surfaces opposed in its own thickness direction, and the negative electrode film layer is provided on either or both of the two surfaces opposed to each other in the negative electrode current collector.

In some embodiments, the negative electrode current collector can be a metal foil or a composite current collector. For example, a copper foil may be used as the metal foil. The composite current collector may include a polymeric material substrate and a metal layer formed on at least one surface of the polymeric material substrate. The composite current collector may be formed by forming a metallic material (copper, copper alloy, nickel, nickel alloy, titanium, titanium alloy, silver, silver alloy, etc.) on a substrate of a high molecular material e.g., a substrate of polypropylene (PP), polyethylene terephthalate (PET), polybutylene terephthalate (PBT), polystyrene (PS), polyethylene (PE), etc.

In some embodiments, the negative electrode film layer optionally includes a binder. By way of example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer also optionally includes a conductive agent. As an example, the conductive agent may be selected from at least one of superconducting carbon, acetylene black, carbon black, Ketjen black, carbon dots, carbon nanotubes, graphene, and carbon nanofiber.

In some embodiments, the negative electrode film layer may also optionally include other adjuvants, e.g., thickeners (e.g., sodium carboxymethylcellulose (CMC-Na)), etc.

In some embodiments, a negative electrode pole piece can be prepared by: dispersing the above-mentioned components for preparing a negative electrode pole piece (e.g., a negative electrode active material), a conductive agent, a binder and any other components in a solvent (e.g., deionized water) to form a negative electrode slurry; applying the negative electrode slurry on a negative electrode current collector, and performing processes e.g., drying and cold pressing, after which a negative electrode pole piece can be obtained.

### [Negative electrode active material]

In some embodiments, the present disclosure provides a negative electrode active material including a silicon-carbon composite. An X-ray photoelectron spectroscopy (XPS) of the silicon-carbon composite has a Si2p spectrum, and the Si2p spectrum has at least one characteristic peak capable of forming sub-peaks after a peak splitting treatment. The sub-peaks include: a first sub-peak having a binding energy ranging from 99.5 eV to 99.9 eV; and a second sub-peak having a binding energy ranging from 98.7 eV to 99.1 eV. A peak area ratio of the first sub-peak to the second sub-peak is (1 to 2):1.

The negative electrode active material of the above scheme has a high specific capacity and a long cycle life. It is critical that the peak area ratio of the first sub-peak to the second sub-peak is (1 to 2):1. If the peak area ratio of the first sub-peak to the second sub-peak is less than 1, it is indicated that the content of pure silicon in the negative electrode active material is high and the silicon crystal grain is large, which is disadvantageous to the lifetime. If the peak area ratio of the first sub-peak to the second sub-peak is greater than 2, it is indicated that the carbon content in the negative electrode active material is too high, resulting in a low specific capacity of the active material and poor first efficiency.

In some embodiments, the binding energy of the first sub-peak refers to a binding energy corresponding to a peak point of the first sub-peak.

In some embodiments, the binding energy of the second sub-peak refers to a binding energy corresponding to a peak point of the second sub-peak.

In some embodiments, the first sub-peak and the second sub-peak have symmetric peak shapes, e.g., a peak conforming to a Gaussian function or a Lorenz function.

In some embodiments, the binding energy of the first sub-peak ranges from 99.6 eV to 99.8 eV, e.g., 99.7 eV.

In some embodiments, the second sub-peak has a binding energy in a range of 98.8 eV to 99.0 eV, e.g., 98.9eV.

In some embodiments, the peak area ratio of the first sub-peak to the second sub-peak is (1.5 to 2):1, e.g., (1.6 to 1.8):1, e.g., 1.7:1.

In some embodiments, the negative electrode active material described above has one or more of the following characteristics: (1) the binding energy of the first sub-peak corresponds to a binding energy of a Si-C bond; (2) the second sub-peak has a binding energy corresponding to a Si-Si bond, and thus the negative electrode active material has a further improved specific capacity, first efficiency and/or cycle life. (3) the binding energy of the first sub-peak ranges from 99.6 eV to 99.8 eV, e.g., 99.7 eV; (4) the binding energy of the second sub-peak ranges from 98.8 eV to 99.0 eV, e.g., 98.9eV; (5) the peak area ratio of the first sub-peak to the second sub-peak is (1.5 to 2): 1; (6) the silicon-carbon composite has a silicon element content in a range of 95wt% to 99.9wt% (e.g., 95wt%, 96wt%, 97wt%, 98wt%, 99wt%, or 99.5wt%) and a carbon element content in a range of 0.1 to 5wt% (e.g., 0.5wt%, 1wt%, 2wt%, 3wt%, 4wt%, 5wt%).

Based on this, the negative electrode active material is used for a secondary battery, and the secondary battery exhibits a further improved specific capacity, first efficiency and/or cycle acceptance.

In some embodiments, the negative electrode active material includes a substrate and the silicon-carbon composite attached to the substrate. Based on this, the negative electrode active material has a further improved specific capacity, first efficiency and/or cycle life.

In some embodiments, the substrate has a porous internal structure, and the silicon-carbon composite is attached to the substrate at an outer surface of the substrate and/or in pores of the porous internal structure. Based on this, the negative electrode active material has a further improved specific capacity, first efficiency and/or cycle life.

In some embodiments, the substrate contains one or more of a carbon material, a silicon oxide material, a lithium titanate material, or combinations thereof. Based on this, the negative electrode active material has further improved specific capacity, first efficiency and/or cycle life.

In some embodiments, the negative electrode active material further includes a carbon coating layer covering the substrate and/or the silicon-carbon composite. Based on this, the negative electrode active material has a further improved specific capacity, first efficiency and/or cycle life.

In some embodiments, the carbon material includes one or more of a graphite material, a hard carbon material, a soft carbon material, or combinations thereof. Based on this, the negative electrode active material has a further improved specific capacity, first efficiency and/or cycle life.

**In** some embodiments, the silicon-carbon composite contains silicon grains having a grain size of 20 nm or less. Based on this, the negative electrode active material has a further improved specific capacity, first efficiency and/or cycle life.

**In** some embodiments, the negative electrode active material has a volume median particle diameter DV₅₀ in a range of 1 to 10 µm (e.g., 2 µm, 4 µm, 6 µm, or 8 µm). Based on this, the negative electrode active material has a further improved specific capacity, first efficiency and/or cycle life.

**In** some embodiments, both the first sub-peak and the second sub-peak have a peak intensity less than 2000, e.g., less than 1500.

**In** some embodiments, the present disclosure provides a method for preparing a negative electrode active material. The method includes: step S1 of providing a substrate and a vapor deposition device, placing the substrate in a deposition furnace, purging the substrate with an inert gas, and performing a preheating operation to heat up to a temperature of 200°C-300°C; step S2 of introducing, in a first mode, a gas into the vapor deposition device, wherein the first mode includes simultaneously introducing a silicon source gas and a carbon source gas into the vapor deposition device; and step S3 of allowing the silicon source gas to react with the carbon source gas to deposit a reaction product on a substrate to form a silicon-carbon composite on the substrate. The silicon-carbon composite has an X-ray photoelectron spectroscopy (XPS) with an Si2p peak, the Si2p peak can form following sub-peaks after a peak splitting treatment: a first sub-peak having a binding energy ranging from 99.5eV to 99.9 eV; and a second sub-peak having a binding energy ranging from 98.7eV to 99.1 eV. A peak area ratio of the first sub-peak to the second sub-peak is (1 to 2):1.

The negative electrode active material obtained based on this scheme has an improved specific capacity, first efficiency and/or cycle life.

**In** some embodiments, the first mode in the step S2 includes simultaneously introducing the silicon source gas, the carbon source gas, and an inert gas into the vapor deposition device. The negative electrode active material obtained based on this scheme has an improved specific capacity, first efficiency and/or cycle life.

**In** some embodiments, the step S2 has one or more of the following characteristics: (1) the inert gas is one or more of nitrogen and argon; and (2) a flow rate of the inert gas introduced into the vapor deposition device ranges from 30% to 85% by volume of a total flow rate of all the introduced gases. The negative electrode active material obtained based on this scheme has an improved specific capacity, first efficiency and/or cycle life.

In some embodiments, in the step S2, the gas is introduced into the vapor deposition device in a first mode and the gas pressure within the vapor deposition device is maintained at 200 Pa to 600 Pa (e.g., 300 Pa, 400 Pa, 500 Pa) that is higher than the standard atmospheric pressure. The negative electrode active material obtained based on this scheme has an improved specific capacity, first efficiency and/or cycle life.

In some embodiments, the step S3 has one or more of the following characteristics: (1) the step S3 is performed at a temperature ranging from 400°C to 800°C (e.g., 500°C, 600°C or 700°C); and (2) the step S3 is performed for 1 hour to 12 hours (e.g., 2 hours, 4 hours, 6 hours, 8 hours, or 10 hours). The negative electrode active material obtained based on this scheme has an improved specific capacity, first efficiency and/or cycle life.

In some embodiments, the method further includes, subsequent to the step S3, step S4 of depositing a carbon material on a product obtained in the step S3. The negative electrode active material obtained based on this scheme has an improved specific capacity, first efficiency and/or cycle life.

In some embodiments, the step S4 includes: operation S4a of introducing, in a second mode, a gas into the vapor deposition device subsequent to forming the silicon-carbon composite, wherein the second mode includes simultaneously introducing a carbon source gas and an inert gas into the vapor deposition device, in which the proportion of the carbon source gas is 5%-15%, and the proportion of the inert gas is 85%-95%; and operation S4b of decomposing the carbon source gas into a carbon material and depositing the carbon material on the silicon-carbon composite. The negative electrode active material obtained based on this scheme has improved specific capacity, first efficiency and/or cycle life.

In some embodiments, the operation S4b has one or more of the following characteristics: (1) the operation S4b is performed at a temperature ranging from 700°C to 850°C (e.g., 750°C to 800°C); and (2) the operation S4b is performed for 1 hour to 6 hours (e.g., 2 hours, 3 hours, 4 hours or 5 hours). The negative electrode active material obtained based on this scheme has an improved specific capacity, first efficiency and/or cycle life.

In some embodiments, the present disclosure provides a negative electrode active material prepared by the method for any of the above embodiments.

In some embodiments, the present disclosure provides a secondary battery including the negative electrode active material described in any one of the above embodiments.

In some embodiments, the present disclosure provides an electrical device including the secondary battery described above.

### [Positive electrode pole piece]

In some embodiments, the positive electrode pole piece generally includes a positive electrode current collector and a positive electrode film layer disposed on at least one surface of the positive electrode current collector, the positive electrode film layer including a positive electrode active material.

As an example, the positive electrode current collector has two surfaces opposed in its own thickness direction, and the positive electrode film layer is provided on either or both of the two surfaces opposed to each other in the positive electrode current collector.

In some embodiments, the positive electrode current collector may be a metal foil or a composite current collector. For example, an aluminum foil may be used as the metal foil. The composite current collector may include a polymer material substrate and a metal layer formed on at least one surface of the polymer material substrate. The composite current collector may be formed by forming a metallic material (aluminum, aluminum alloy, nickel, nickel alloy, titanium, titanium alloy, silver, silver alloy, etc.) on a substrate of a high molecular material e.g., a substrate of polypropylene (PP), polyethylene terephthalate (PET), polybutylene terephthalate (PBT), polystyrene (PS), polyethylene (PE), etc.

In some embodiments, a positive electrode active material for a battery known in the art can be used as the positive electrode active material. As an example, the positive electrode active material may include at least one of the following materials: lithium-containing phosphates of the olivine structure, lithium transition metal oxides and their respective modified compounds. However, the present disclosure is not limited to these materials, and other conventional materials that can be used as a positive electrode active material for a battery can also be used. Only one of these positive electrode active materials or a combination of two or more of these positive electrode active materials may be used. Examples of the lithium transition metal oxide may include, but are not limited to at least one of lithium cobalt oxide (e.g., LiCoO₂), lithium nickel oxide (e.g., LiNiO₂), lithium manganese oxide (e.g., LiMnO₂, LiMn₂O₄), lithium nickel cobalt oxide, lithium manganese cobalt oxide, lithium nickel manganese oxide, lithium nickel cobalt manganese oxide (e.g., LiNi_{1/3}Co_{1/5}n_{1/3}O₂ (also referred to as NCM₃₃₃ for short), LiNi_{0.5}Co_{0.2}Mn_{0.3}O₂ (also be referred to as NCM₅₂₃ for short), LiNi_{0.5}Co_{0.25}Mn_{0.25}O₂ (also referred to as NCM₂₁₁ for short), LiNi_{0.6}Co_{0.2}Mn_{0.2}O₂ (also referred to as NCM₆₂₂ for short), LiNi_{0.8}Co_{0.1}Mn_{0.1}O₂ (also referred to as NCM₈₁₁ for short), lithium nickel cobalt aluminum oxide (e.g., LiNi_{0.85}Co_{0.15}Al_{0.05}O₂) and modified compounds thereof. Examples of the lithium-containing phosphate of the olivine structure may include, but are not limited to, at least one of lithium iron phosphate (e.g., LiFePO₄ (also referred to as LFP for short)), a composite of lithium iron phosphate and carbon, lithium manganese phosphate (e.g., LiMnPO₄), a composite of lithium manganese phosphate and carbon, lithium iron manganese phosphate, a composite of lithium iron manganese phosphate and carbon.

In some embodiments, the positive electrode film layer also optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and a fluorine-containing acrylate resin.

In some embodiments, the positive electrode film layer also optionally includes a conductive agent. As an example, the conductive agent may include at least one of superconducting carbon, acetylene black, carbon black, Ketjen black, carbon dots, carbon nanotube, graphene, and carbon nanofiber.

In some embodiments, a positive electrode pole piece can be prepared by: dispersing the above-mentioned components for preparing a positive electrode pole piece (e.g., a positive electrode active material), a conductive agent, a binder and any other components in a solvent (e.g., N-methyl pyrrolidone) to form a positive electrode slurry; and applying the positive electrode slurry onto a positive electrode current collector, and performing drying, cold pressing and other processes, so as to obtain the positive electrode pole piece.

### [Electrolyte]

The electrolyte serves to conduct ions between the positive electrode pole piece and the negative electrode pole piece. The present disclosure does not specifically limit the type of the electrolyte, and the type of the electrolyte can be selected according to requirements. For example, the electrolyte may be liquid, gel, or all-solid.

In some embodiments, the electrolyte is liquid and includes an electrolyte salt and a solvent.

In some embodiments, the electrolyte salt can be selected from at least one of lithium hexafluorophosphate, lithium tetrafluoroborate, lithium perchlorate, lithium hexafluoroarsenate, lithium bisfluorosulfonimide, lithium bis-trifluoromethane sulfonimide, lithium triflate, lithium difluorophosphate, lithium difluorooxalato borate, lithium dioxalato borate, lithium difluorooxalato phosphate, and lithium tetrafluorooxalato phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte further optionally includes an additive. As an example, the additive may include a negative electrode film-forming additive, a positive electrode film-forming additive, and may further include an additive capable of improving certain properties of the battery, e.g., an additive for improving overcharge properties of the battery, an additive for improving high-temperature or low-temperature properties of the battery, etc.

### [Separation membrane]

In some embodiments, a separation membrane is further included in the secondary battery. There is no particular limitation on the kind of the separation membrane in the present disclosure, and any known porous structure separation membrane having good chemical stability and mechanical stability can be selected.

In some embodiments, the material of the separation membrane may be selected from at least one of glass fiber, non-woven fabric, polyethylene, polypropylene, and polyvinylidene fluoride. The separation membrane may be a single-layer film or a multi-layer composite film, without particular limitation. When the separation membrane is a multi-layer composite film, the materials of each layer may be the same or different, without particular limitation.

In some embodiments, the positive electrode pole piece, the negative electrode pole piece, and the separation membrane can be made into an electrode assembly by a winding process or a lamination process.

In some embodiments, the secondary battery may include an outer package. The outer package may be used to encapsulate the electrode assembly and the electrolyte.

In some embodiments, the outer package of the secondary battery may be a hard case e.g., a hard plastic case, an aluminum case, a steel case, and the like. The outer package of the secondary battery may alternatively be a soft package, e.g., a pouch-type soft package. The material of the soft package may be plastic, and as the plastic, polypropylene, polybutylene terephthalate, polybutylene succinate, etc. may be listed.

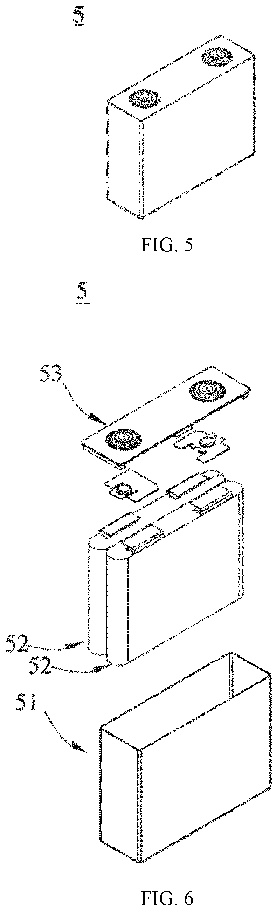

The shape of the secondary battery is not particularly limited in the present disclosure, and may be cylindrical, square or any other shape. For example, FIG. 5 is a secondary battery 5 having a square structure as one example.

In some embodiments, referring to FIG. 6, the outer package may include a housing 51 and a cover 53. Here, the housing 51 may include a bottom plate and a side plate connected to the bottom plate, the bottom plate and the side plate form a receiving chamber. The housing 51 has an opening communicating with the receiving chamber, and the cover plate 53 can cover the opening to close the receiving chamber. The positive electrode pole piece, the negative electrode pole piece, and the separation membrane may be formed into an electrode assembly 52 through a winding process or a lamination process. The electrode assembly 52 is enclosed within the receiving chamber. The electrolyte infiltrates into the electrode assembly 52. The number of the electrode assemblies 52 contained in the secondary battery 5 may be one or more, and can be selected by a person skilled in the art according to specific actual requirements.

In some embodiments, the one or more secondary batteries can be assembled into a battery module, and the number of secondary batteries contained in the battery module can be one or more, and the specific number can be selected by a person skilled in the art according to the application and capacity of the battery module.

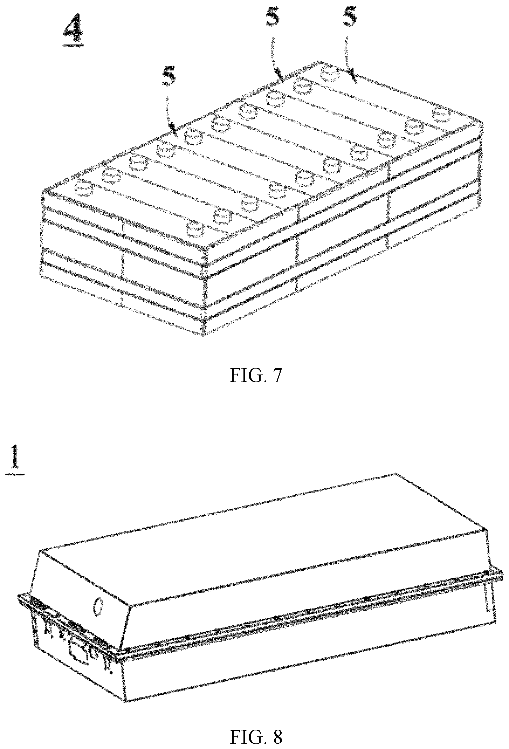

FIG. 7 is a battery module 4 as one example. Referring to FIG. 7, in the battery module 4, a plurality of secondary batteries 5 may be sequentially arranged along a length direction of the battery module 4. Of course, the plurality of secondary batteries 5 may be arranged in any other manner. The plurality of secondary batteries 5 may further be fixed by fasteners.

Optionally, the battery module 4 may further include a housing having a receiving space in which the plurality of secondary batteries 5 are received.

In some embodiments, the above-mentioned battery module can also be assembled into a battery pack, and one or more battery modules may be contained in the battery pack, The specific number of the one or more battery modules can be selected by a person skilled in the art according to the application and capacity of the battery pack.

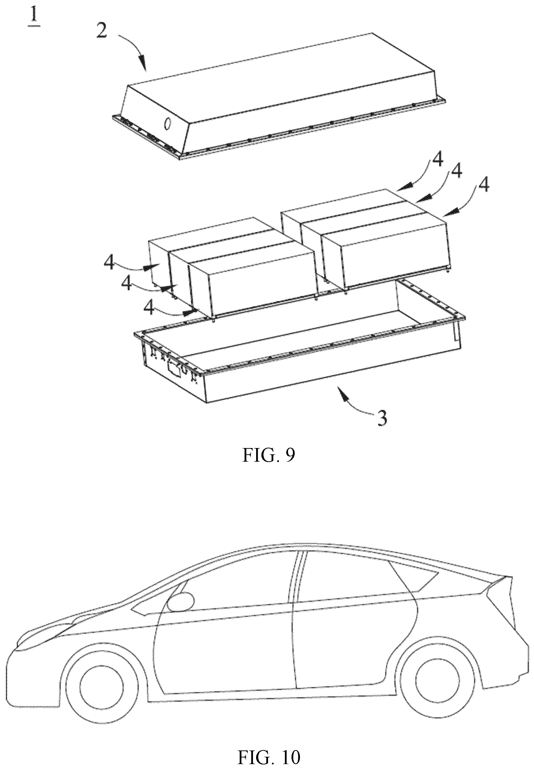

FIGS. 8 and 9 show a battery pack 1 as one example. Referring to FIGS. 8 and 9, a battery case and a plurality of battery modules 4 provided in the battery case may be included in the battery pack 1. The battery case includes an upper box body 2 and a lower box body 3, and the upper box body 2 can cover the lower box body 3, thereby forming an enclosed space for accommodating the plurality of battery modules 4. The plurality of battery modules 4 may be arranged in the battery case in an arbitrary manner.

In addition, the present disclosure also provides an electrical device including at least one of the secondary battery, battery module, or battery pack provided herein. The secondary battery, battery module, or battery pack may be used as a power source for the electrical device or an energy storage unit for the electrical device. The electrical device may include, but is not limited to, mobile equipment (e.g., a cell phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship and a satellite, an energy storage system, etc.

The secondary battery, a battery module, or a battery pack may be selected according to usage requirements of the electrical device.

FIG. 10 is an electrical device as an example. The electrical device is a pure electric vehicle, a hybrid electric vehicle, or a plug-in hybrid electric vehicle. To meet the high power and high energy density requirements of the secondary battery for the electrical device, the battery pack or battery module may be employed.

Hereinafter, embodiments of the present disclosure will be described. The embodiments described below are exemplary only, should be construed as an explanation of the present disclosure, and should not be construed as limiting the present disclosure. Where specific techniques or conditions are not specified in the embodiments, they are performed according to techniques or conditions described in the literature in the art or according to the product description. The reagents or instruments used are conventional products that can be obtained commercially without indicating the manufacturer.

### Comparative example 1

A commercially available silicone material was provided as the negative electrode active material of Comparative example 1.

The composition of the silicone material is as follows: Li 8wt%, Si 52wt%, O 35.8wt% and C 4.2wt%.

### Example 1

At S1, the same silicone material as that in Comparative example 1 is provided as a substrate, a chemical vapor deposition (CVD) device is provided, 1 kg of the substrate is placed in a reaction chamber of the chemical vapor deposition device, the reaction chamber is purged with nitrogen, and the reaction chamber is warmed to 200°C.

At S2, a mixed gas is introduced into the reaction chamber in a first mode. The first mode includes introducing the mixed gas into the reaction chamber according to a volume ratio of monosilane: acetylene: nitrogen = 20%: 5%: 75%, the total gas flow rate is 5 L/min, and a gas pressure in the reaction chamber is controlled to be higher than atmospheric pressure by 200 Pa.

At S3, the temperature in the reaction chamber is raised to 600°C to react the monosilane with acetylene, and a formed reaction product (carbon-silicon composite) is deposited on the substrate for 4 h.

At S4, a mixed gas is introduced into the reaction chamber in a second mode. The second mode includes introducing the mixed gas into the reaction chamber according to the volume ratio of acetylene: nitrogen = 5%:95%.

At S5, the temperature in the reaction chamber is raised to 850°C to cause the acetylene to decompose to form a carbon material, and the carbon material is deposited on a surface of the product obtained at the previous step, the deposition process is performed for 2h.

After being cooled, the final product is removed from the reaction chamber and is sieved through a screen of 325 meshes. Thereby, the negative electrode active material of Example 1 was obtained.

The negative electrode active material of Example 1 includes a substrate, a first coating layer deposited on a surface of the substrate, and a second coating layer deposited on a surface of the first coating layer. The material of the substrate is silicon-oxygen material. The material of the first coating layer is a silicon-carbon composite. The material of the second coating layer is a carbon material.

### Examples 2 to 3

Example 2 differs from Example 1 in that, at Step S2, monosilane: acetylene: nitrogen = 20%: 7%: 73%.

Example 3 differs from Example 1 in that, monosilane: acetylene: nitrogen is adjusted to be 20%: 2%: 78% at Step S2.

### Comparative examples 2 to 3

Comparative example 2 differs from example 1 in that at step S2, monosilane: acetylene: nitrogen = 20%: 10%: 70%.

Comparative example 3 differs from example 1 in that at step S2, monosilane: acetylene: nitrogen = 20%: 0.5%: 79.5%.

### Preparation of button battery

The negative electrode active materials of Comparative example 1 and Example 1 were used to assemble a button-type lithium-ion battery as follows.

The negative electrode active material, conductive carbon black and polyacrylic acid as binder are mixed in a mass ratio of 8: 1: 1, deionized water as solvent is added, and the above mixture is stirred with a stirrer until a uniform system is obtained so as to obtain a negative electrode slurry with a solid content of 45wt%. The negative electrode slurry is uniformly applied on a copper foil used as a negative electrode current collector and then is dried at 85°C to obtain a pole piece after a cold pressing. A button battery was obtained by taking metal lithium as a counter electrode, using a Celgard 2400 separation membrane and injecting electrolyte. The solvent of the electrolyte is a mixture of ethylene carbonate (EC), ethyl methyl carbonate (EMC) and diethyl carbonate (DEC), where the volume ratio of EC, EMC and DEC being 20: 20: 60. The solute of the electrolyte was LiPF₆ at a concentration of 1 mol/L. The electrolyte also contains fluoroethylene carbonate (FEC) as additive, and the content of FEC in the electrolyte was 5wt%.

### Analysis and detection

### Powder performance test:

### 1) XPS detection

The negative electrode active materials of the examples and the comparative examples were tested using an X-ray photoelectron spectroscopy (Thermo Scientific ESCALAB Xi+) to obtain Si2p spectra of the materials. The characteristic peaks of Si2p spectra were processed by XPSpeak software based on split-peak fitting.

The Si2p spectrum of the negative electrode active material of Comparative example 1 has a characteristic peak in the range of 100eV to 104eV, which has a binding energy of 102.3eV corresponding to a binding energy of a Si-O-C bond.

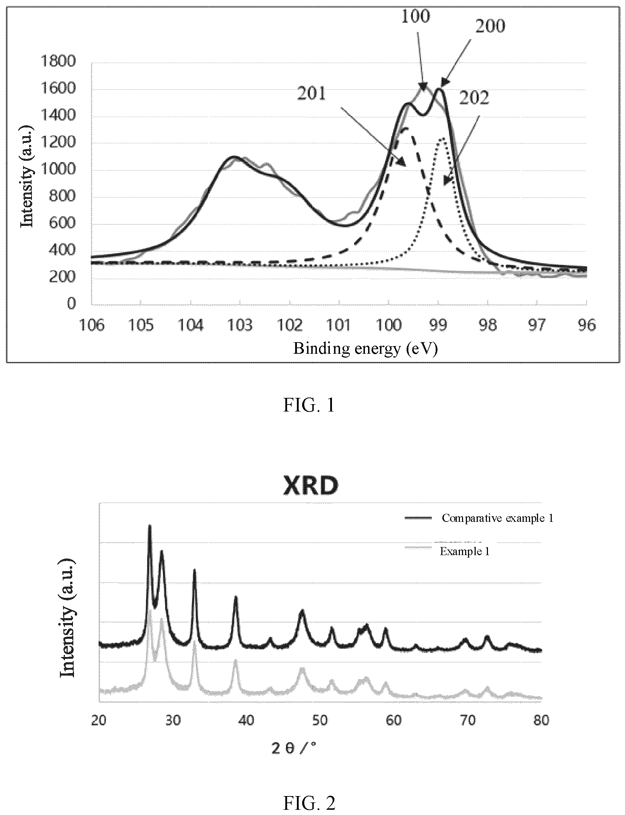

FIG. 1 shows the Si2p spectrum of the negative electrode active material of Example 1. As shown in FIG. 1, the Si2p spectrum of the negative electrode active material of Example 1 has an original curve 100. The original curve 100 has a characteristic peak in the range of 98eV to 101eV and a characteristic peak in the range of 101eV to 105eV. A fitted curve 200 can be formed by performing a split-peak fitting process on the characteristic peak in the range of 98eV to 101eV. The fitted curve 200 shows a superposition of two sub-peaks at positions in the range of 101 to 105eV. The two sub-peaks include:
a first sub-peak 201 having a binding energy of 99.7 eV (corresponding to a binding energy of a Si-C bond); and
a second sub-peak 202 having a binding energy of 98.9 eV (corresponding to a binding energy of a Si-Si bond).

The ratio of the peak area A_{Si-C} of the first sub-peak 201 to the peak area A_{Si-Si} of the second sub-peak 202, A_{Si-C}/A_{Si-Si}, is 1.7. Both the first and second sub-peaks have a peak intensity less than 2000. The A_{Si-C}/A_{Si-Si} test results for each example and comparative example are as shown in Table 2.

### 2) XRD test, grain size calculation, laser diffraction particle size distribution

XRD spectra of the above-mentioned silicon carbon materials were obtained using a Bruker D8 Discover X which is an X-ray diffractometer according to the test method JIS K 0131-1996 with a test angle range of 20° to 80°. After data acquisition, X'Pert Highscore plus software was used for fitting, and the grain size of silicon (111) crystal plane corresponding to 28.5 ° ± 0.1 ° was calculated according to Scherrer formula.

The XRD spectra of Example 1 and Comparative example 1 were as shown in FIG. 2. Diffraction peaks of Li₂SiO₃ and Si can be observed in the XRD spectrum of the negative electrode active material of Comparative example 1. The distribution of diffraction peaks in the XRD spectrum of the negative electrode active material of Example 1 was basically the same as that of the Comparative example, but the intensity of the diffraction peaks was weakened. It is indicated that the silicon-carbon composite and the carbon material deposited on the substrate in Example 1 have substantially no diffraction peaks and have a substantially amorphous structure.

The silicon grain sizes calculated based on the Scherrer formula are as shown in the table below. The average size of silicon grains in the negative electrode active materials of Comparative example 1 and Example 1 was in the range of 6 nm to 8 nm.

The particle size distribution data of the negative electrode active materials of the examples and the comparative examples based on the laser diffraction method are as shown in the following table. Volume distribution particle size data Dv10 (µm), dv50 (µm), dv90 (µm) and Dv99 (µm), and number particle size distribution data DN10 (µm) are included. The particle size test method refers to a laser diffraction method commonly used in the art, e.g., GB/T 19077-2016 particle size distribution laser diffraction method. The particle size distribution data of the negative electrode active materials of Example 1 and Comparative example 1 are as shown in Table 1.

**Table 1**

| | Comparative example 1 | Example 1 |
|---|---|---|
| D_{V}10 (µm) | 3.8 | 4.3 |
| D_{V}50 (µm) | 6.0 | 7.2 |
| D_{V}90 (µm) | 9.3 | 12.1 |
| D_{V}99 (µm) | 12.0 | 16.4 |
| D_{N}10 (µm) | 2.8 | 3.1 |
| Silicon grain size/Scherrer formula calculation | 7.1 | 6.7 |

### 3) Elemental composition detection

The negative electrode active material prepared in Example 1 was subjected to elemental composition test according to the following test method.

Carbon content test: according to GB/T 20123-2006/ISO 15350: 2000 test standard, HSC-140 carbon content analyzer was used to test and obtain the carbon content of the material.

Content test of lithium, silicon and oxygen: the lithium content and silicon content were measured with an inductively coupled plasma emission spectrometer (ICP, iICAP 7400 equipment) according to the standard EPA 6010D-2014, and the oxygen content was calculated based on the measured carbon content/lithium content/silicon content, and the oxygen content = 100%-silicon content-carbon content-lithium content.

The composition of the negative electrode active material of Example 1 was as follows: Li 6.8wt%, Si 57wt%, O 29.7wt% and C 6.5wt%.

In the negative electrode active material of Example 1, the composition of the silicon-carbon composite constituting the first coating layer was as follows. The silicon content is 97.5% and the carbon content is 2.5% (calculated based on the silicon content/carbon content before and after deposition). The test results for each example and comparative example are as shown in Table 2.

4) First charge/discharge efficiency of the battery:
the first cycle efficiency test flow is as follows:
the assembled button battery was left for 60 min;

Li insertion capacity: 0.05C constant current discharge was adopted to allow the battery to discharge to 5 mV, then 50 µA discharge was adopted to allow the battery to discharge to 5 mV, and then the battery was left for 10 min.

Delithiation capacity: 0.1C charge is adopted to allow the battery to charge to 1.5V.

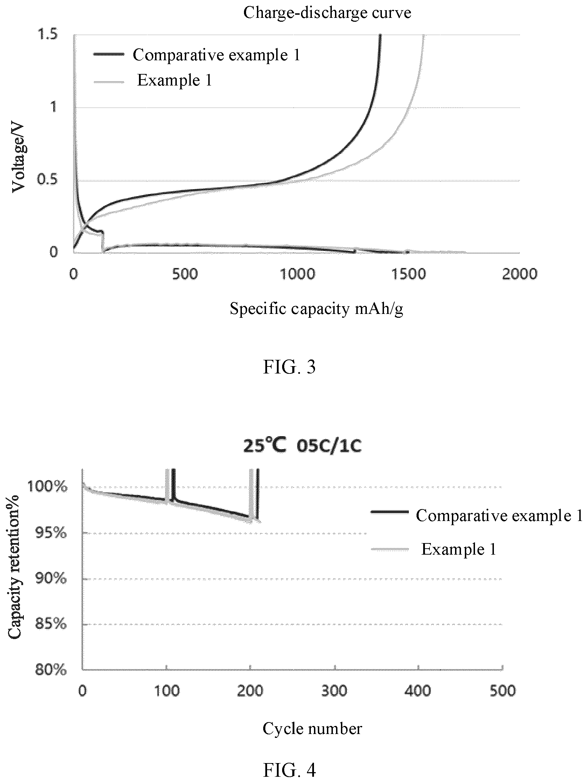

The specific capacity voltage curve of first cycle lithium intercalation and delithiation is as shown in FIG. 3.

The first-cycle cycle efficiency (referred to as first efficiency) is calculated by the following formula:

First efficiency% = delithiation capacity/lithium insertion capacity.

The test results are as shown in Table 2 below.

As can be seen from the above Table 2 and FIG. 3, the negative electrode active material of Example 1 has significantly improved delithiation capacity and lithium insertion capacity as compared to Comparative example 1. The first efficiency of the negative electrode active material of Example 1 was substantially equivalent to that of Comparative example 1. The test results for each example and comparative example are as shown in Table 2.

### 5) Battery cycle life test

The negative electrode active materials of the examples and the comparative examples were assembled into a total battery.

The positive electrode slurry was formulated as follows: a positive electrode NCM ternary material, a conductive agent Super P and a binder PVDF were mixed in a mass ratio of 97: 1.5: 1.5, a solvent N-methyl pyrrolidone (NMP) was added, and the obtained mixture is stirred under the action of a vacuum stirrer until a uniform system is obtained, so as to obtain a positive electrode slurry with a solid content of 77wt%. The positive electrode slurry was uniformly applied on an aluminum foil which is used as a positive electrode current collector and was dried at 85°C, then subjected to cold pressing, edge cutting, slitting and cutting, and finally dried under a vacuum condition at 85°C for 4 h to obtain a positive electrode pole piece to be used.

The negative electrode slurry was formulated as follows: a negative electrode active substance (90% graphite, 10% silicon), a conductive agent (containing CNTs), sodium carboxymethyl cellulose (CMC) as a thickener and styrene-butadiene rubber (SBR) as a binder were mixed in a mass ratio of 96.2: 1.3: 1.0: 1.5, deionized water as a solvent was added, the obtained mixture was stirred under the action of a vacuum stirrer until a uniform system is obtained so as to obtain a negative electrode slurry with a solid content of 52%; the negative electrode slurry was uniformly applied on the first negative electrode membrane layer and was dried at 85°C, then was subjected to cold pressing, edge cutting, slitting and cutting, and finally was dried under a vacuum condition at 120°C for 12 h to obtain a negative electrode pole piece to be used.

The electrolyte formulation was as follows. An organic solvent is a solution of a mixture of ethylene carbonate (EC), methyl ethyl carbonate (EMC) and diethyl carbonate (DEC), where the volume ratio of EC, EMC and DEC is 20: 20: 60. In an argon atmosphere glove box with a water content of < 10 ppm, a well-dried lithium salt was dissolved in the above-mentioned organic solvent, and then 10wt% of fluoroethylene carbonate (FEC) as an additive was added, and the above materials were mixed uniformly to obtain an electrolyte. The concentration of the lithium salt is 1mol/L.

The positive electrode slurry was applied on an aluminum foil which is a current collector to obtain a positive electrode pole piece, and the negative electrode slurry was applied on a copper foil current collector to obtain a negative electrode pole piece, and the positive electrode pole piece, the separation membrane, and the negative electrode pole piece were wound to be placed in a battery case, an electrolyte was injected into the battery case and then the battery case is sealed to obtain a total battery.

Charge-discharge cycling tests were performed on the total batteries at a charge-discharge rate of 0.5C/1C and a cutoff voltage in a range of 2.5V to 4.25V to obtain a capacity retention versus cycle number curve as shown in FIG. 4. The results of the 200-cycle retention test for each example and comparative example are as shown in Table 2 below.

As can be seen from Table 2 and FIG. 4, the capacity retention rates of the total batteries of Example 1 and Comparative example 1 after 200 cycles were 96.6% and 96.8%, respectively. The capacity retention of Example 1 is substantially comparable to that of Comparative example 1, and the material of Example 1 maintains better capacity retention while significantly increasing the specific capacity.

### 6) Cell energy density test

After the batteries prepared in the examples and the comparative example were fully discharged at 1C, then fully charged at 1C rate, and then fully discharged at 1C rate at 25°C, an actual discharge energy at this time was recorded. The batteries were weighed using an electronic balance at 25°C. The ratio of an actual discharge energy D/Wh at 1C of the battery to the weight m/kg of the battery is an actual energy density E of the battery, E = D/m.

The energy densities of the total batteries of Example 1 and Comparative example 1 were 276 Wh/kg and 266 Wh/kg respectively, and the energy density was increased by 3.8%. The energy density test results for each example and comparative example are as shown in Table 2 below.

**Table 2**

| | A_{Si-C}/A_{Si-Si} | Lithium insertion capacity | 1.5 V delithiation capacity mAh/g | First efficiency | 200 Cycles Cycle retention% | Energy density Wh/kg | Silicon-carbon composite | |
|---|---|---|---|---|---|---|---|---|
| | | | | | | | Silicon content | Carbon content |
| Example 1 | 1.7 | 1753.4 | 1569.3 | 89.5% | 96.6% | 276 | 97.5wt% | 2.5wt% |
| Example 2 | 2 | 1689.6 | 1503.7 | 89% | 96.8% | 270 | 96.7wt%- | 3.3wt% |
| Example 3 | 1 | 1852 | 1670.5 | 90.2% | 95.5% | 281 | 98.8wt% | 1.2wt% |
| Comparative example 1 | / | 1500.8 | 1373.2 | 91.5% | 96.8% | 266 | - | - |
| Comparative example 2 | 2.5 | 1623.3 | 1409 | 86.8% | 96.1% | 265 | 95.4wt% | 4.6wt% |
| Comparative example 3 | 0.5 | 1922.2 | 1730 | 90% | 90.1% | 280 | 99.6wt% | 0.4wt% |

After the XPS Si2p spectra of the negative electrode active materials of Examples 1 to 3 were fitted via a peak splitting treatment, it has a peak area ratio of the first sub-peak to the second sub-peak of (1 to 2):1. The negative electrode active material is used for a secondary battery, and the battery shows an improved specific capacity, an improved first efficiency, and a longer cycle life.

After XPS Si2p spectrum of the negative electrode active material of Comparative example 3 was processed via a peak-separation fitting, it has a peak area ratio of the first sub-peak to the second sub-peak of < 1. The negative electrode active material has a high content of pure silicon and larger silicon grains, which is unfavorable for the lifetime. The peak area ratio of the first sub-peak to the second sub-peak in Comparative example 2 is greater than 2, and the carbon content in the negative electrode active material is too high, resulting in a low specific capacity of the active material and a poor first efficiency.

It should be noted that the present disclosure is not limited to the above-mentioned embodiments. The above-mentioned embodiments are merely examples, and within the scope of the technical solution of the present disclosure, embodiments having substantially the same constitution as the technical idea and exerting the same function and effect are all included within the technical scope of the present disclosure. In addition, various modifications may be made to the embodiments by a person skilled in the art without departing from the spirit of the present disclosure, and other embodiments that are constructed by combining some of the constituent elements of the embodiments are also included in the scope of the present disclosure.

## Claims

1. A negative electrode active material, comprising a silicon-carbon composite, an X-ray photoelectron spectroscopy, XPS, of the silicon-carbon composite having a Si2p spectrum, the Si2p spectrum having at least one characteristic peak capable of forming sub-peaks after a peak splitting treatment, the sub-peaks comprising:
a first sub-peak having a binding energy ranging from 99.5 eV to 99.9 eV; and
a second sub-peak having a binding energy ranging from 98.7 eV to 99.1 eV;
wherein a peak area ratio of the first sub-peak to the second sub-peak is (1 to 2):1.

2. The negative electrode active material according to claim 1, wherein the negative electrode active material has one or more of the following characteristics:
(1) the binding energy of the first sub-peak corresponds to a binding energy of a Si-C bond;
(2) the binding energy of the second sub-peak corresponds to a binding energy of a Si-Si bond;
(3) the binding energy of the first sub-peak ranges from 99.6 eV to 99.8 eV;
(4) the binding energy of the second sub-peak ranges from 98.8 eV to 99.0 eV;
(5) the peak area ratio of the first sub-peak to the second sub-peak is (1.5 to 2):1; and
(6) the silicon-carbon composite has a silicon element content of 95wt% to 99.9wt%, and a carbon element content of 0.1wt% to 5wt%.

3. The negative electrode active material according to claim 1 or 2, comprising a substrate and the silicon-carbon composite attached to the substrate.

4. The negative electrode active material according to claim 3, wherein:
the substrate has a porous internal structure; and
the silicon-carbon composite is attached to the substrate at an outer surface of the substrate and/or in pores of the porous internal structure.

5. The negative electrode active material according to claim 3 or 4, wherein a material of the substrate comprises one or more of a carbon material, a silicon oxide material, a lithium titanate material, or combinations thereof.

6. The negative electrode active material according to any one of claims 1 to 5, further comprising a carbon coating layer, the carbon coating layer covering the substrate and/or the silicon-carbon composite.

7. The negative electrode active material according to claim 6, wherein the carbon material comprises one or more of a graphite material, a hard carbon material, a soft carbon material, or combinations thereof.

8. The negative electrode active material according to any one of claims 1 to 7, wherein the silicon-carbon composite comprises silicon grains, the silicon grains having a grain size of 20 nm or less.

9. The negative electrode active material according to any one of claims 1 to 8, wherein the negative electrode active material has a volume median particle diameter DV₅₀ in a range of 1 µm to 10 µm.

10. The negative electrode material according to any one of claims 1 to 9, wherein both the first sub-peak and the second sub-peak have a peak intensity less than 2000.

11. A method for preparing a negative electrode active material, comprising:
step S1 of providing a substrate and a vapor deposition device, placing the substrate in a deposition furnace, purging the substrate with an inert gas, and performing a preheating operation to heat up to a temperature ranging from 200°C to 300°C;
step S2 of introducing, in a first mode, a gas into the vapor deposition device, wherein the first mode comprises simultaneously introducing a silicon source gas and a carbon source gas into the vapor deposition device; and
step S3 of allowing the silicon source gas to react with the carbon source gas to deposit a reaction product on the substrate to form a silicon-carbon composite on the substrate,
wherein:
an X-ray photoelectron spectroscopy, XPS, of the silicon-carbon composite has a Si2p spectrum, and the Si2p spectrum has at least one characteristic peak capable of forming following sub-peaks after a peak-splitting treatment:
a first sub-peak having a binding energy ranging from 99.5 eV to 99.9 eV; and
a second sub-peak having a binding energy ranging from 98.7 eV to 99.1 eV,
wherein a peak area ratio of the first sub-peak to the second sub-peak is (1 to 2):1.

12. The method according to claim 11, wherein the step S2 has one or more of the following characteristics:
(1) the silicon source gas is one or more of silane and disilane; and/or
(2) the carbon source gas is one or more of methane, ethylene, and acetylene; and
(3) a volume flow ratio of the silicon source gas to the carbon source gas is (2 to 10):1.

13. The method according to claim 11 or 12, wherein the first mode in the step S2 comprises simultaneously introducing the silicon source gas, the carbon source gas, and an inert gas into the vapor deposition device.

14. The method according to claim 13, wherein the step S2 has one or more of the following characteristics:
(1) the inert gas is one or more of nitrogen and argon; and
(2) a flow rate of the inert gas introduced into the vapor deposition device ranges from 30% to 85% by volume of a total flow rate of all the introduced gases.

15. The method according to any one of claims 11 to 14, wherein in the step S2, the gases are introduced into the vapor deposition device in the first mode, and a gas pressure in the vapor deposition device is maintained at 200 Pa to 600 Pa higher than a standard atmospheric pressure.

16. The method according to any one of claims 11 to 14, wherein the step S3 has one or more of the following characteristics:
(1) the step S3 is performed at a temperature ranging from 400°C to 800°C; and/or
(2) the step S3 is performed for 1 hour to 12 hours.

17. The method according to any one of claims 10 to 15, further comprising, subsequent to the step S3:
step S4 of depositing a carbon material on a product obtained in the step S3.

18. The method according to claim 17, wherein the step S4 comprises:
operation S4a of introducing, in a second mode, a gas into the vapor deposition device subsequent to forming the silicon-carbon composite, wherein the second mode comprises simultaneously introducing a carbon source gas and an inert gas into the vapor deposition device, a proportion of the carbon source gas ranging from 5% to 15%, and a proportion of the inert gas ranging from 85% to 95%; and
operation S4b of decomposing the carbon source gas into a carbon material and depositing the carbon material on the silicon-carbon composite.

19. The method according to claim 18, wherein the operation S4b has one or more of the following characteristics:
(1) the operation S4b is performed at a temperature ranging from 700°C to 850°C; and
(2) the operation S4b is performed for 1 hour to 6 hours.

20. A negative electrode active material, prepared by the method according to any one of claims 11 to 19.

21. A secondary battery, comprising the negative electrode active material according to any one of claims 1 to 10 and 20.

22. An electrical device, comprising the secondary battery according to claim 21.
